# NEUE EUROPÄISCHE PATENTSCHRIFT

(11) **EP 2 210 787 B2**
(45) Veröffentlichungstag und Bekanntmachung des Hinweises auf die Entscheidung über den Einspruch: **04.05.2022**
(45) Hinweis auf die Patenterteilung: 09.08.2017
(21) Anmeldenummer: 10000583.4
(22) Anmeldetag: 21.01.2010
(51) Int. Cl.: B60T 8/17, B60T 8/88

(54) **Elektro-pneumatisches Bremssystem mit achslastsignalloser Steuerung**
Electro-pneumatic brake system with control without axle load signal
Système de freinage électropneumatique doté d'une commande sans signal de charge d'essieu

(30) Priorität: 21.01.2009 DE 102009005472
(43) Veröffentlichungstag der Anmeldung: 28.07.2010
(73) Patentinhaber: KNORR-BREMSE Systeme für Nutzfahrzeuge GmbH, 80809 München (DE)
(72) Erfinder: Horn, Matthias, 71229 Leonberg (DE)
(74) Vertreter: Aurigium Leischner & Luthe

(56) Entgegenhaltungen:
- EP-A1- 0 637 534
- EP-A1- 0 943 514
- EP-A1- 2 093 113
- WO-A1-03/011664
- WO-A1-2007/060135
- DE-A1- 19 621 671
- DE-A1- 19 726 116
- DE-A1- 19 858 583
- DE-A1- 19 859 966
- DE-A1-102004 008 265

## Beschreibung

Die Erfindung betrifft ein Bremssystem eines Kraftfahrzeugs, und bezieht sich insbesondere auf ein kombiniertes elektro-pneumatisches Bremssystem nach dem Oberbegriff des Patentanspruchs 1.

In derzeitigen Bauformen einer elektronisch gesteuerten elektro-pneumatischen Betriebsbremsanlage eines Nutzfahrzeugs, welches einen Anhänger als Anhängelast aufweisen kann, vorwiegend in einem elektronischen Bremssystem, kommen als Regel- bzw. Steuerungsverfahren häufig Prinzipien nach Art einer Differenzschlupfregelung oder einer Drucksteuerung zum Einsatz.

Während sich die Differenzschlupfregelung durch Vorteile wie beispielsweise das Vorhandensein mehrerer, beispielsweise dreier, kaskadierter Regelkreise, die Nutzung von Adaptionsphasen, Robustheit und Unempfindlichkeit gegenüber Schwankungen von Bremskennwerten und die Notwendigkeit von Fahrzeugparametern nur für eine Koppelkraftregelung auszeichnet, gelten bei dieser Art der Regelung unter anderem als nachteilig, dass das Bremspedalgefühl am Fußbremsmodul nicht konstant ist und somit Beladungsänderungen eine erneute Adaption erfordern, dass eine Verbindung zwischen den Regelkreisen für die Verzögerungsregelung und die Koppelkraftregelung dahin gehend, dass bei einem zu kleinen Stellbereich der Koppelkraftregelung ein Zugfahrzeug einen Verzögerungsfehler übernehmen muss, oder die Koppelkraftregelung nur abschaltbar ist, nachdem eine manuelle Abstimmung der Kombination erfolgt ist, und dass Verzögerungsfehler ausschließlich auf die Bremskräfte des Zugfahrzeugs wirken. Darüber hinaus ist eine Diagnostizierbarkeit und/oder eine Wartbarkeit einer mittels einer Differenzschlupfregelung geregelten Betriebsbremsanlage nur durch speziell geschultes Personal möglich.

Eine mit mittels der an sich komplexeren Drucksteuerung gesteuerte Betriebsbremsanlage hingegen zeichnet sich unter anderem dadurch aus, dass neben einer einfachen Systemstruktur des zugrunde liegenden Basissystems keine Adaptionsphasen durchlaufen werden müssen und somit unmittelbar nach einer Initialisierung, beispielsweise einem Startvorgang, ein konstantes Bremspedalgefühl bereitgestellt wird, eine hohe Grundrobustheit vorliegt, diese Steuerungsform bei Fahrzeugherstellern weithin anerkannt ist, und eine gute Wartbarkeit in Werkstätten gegeben ist. Als nachteilig gilt bei dieser Art der Steuerung jedoch unter anderem, dass eine Bremsberechnung und/oder Fahrzeugparameter benötigt werden. Beispielsweise sind Messgrößen bezüglich der Achslast des Fahrzeugs von wesentlicher Bedeutung, da die Steuerung der Bremskraft an den einzelnen Radbremsen in Abhängigkeit von der erfassten Achslast eingestellt wird. Ein Hauptnachteil der Drucksteuerung besteht daher in der Notwendigkeit eines Achslastsensors zur Bereitstellung dieser notwendigen Parameter bzw. Messgrößen.

Achslasten werden bei den vorgenannten bekannten Verfahren in der Regel über Achslastsensoren gemessen. Während dies bei luftgefederten Fahrzeugen in der Regel ohne Weiteres darstellbar ist, beispielsweise durch einen Luftfederbalg-Drucksensor zur Messung des Luftfederbalgdrucks bei einer Luftfederung, erfordert die Achslastmessung bei stahlgefederten Fahrzeugen, etwa Spezialfahrzeugen oder Kleinserien, einen Wegsensor zur Messung des Einfederweges der Stahlfederung. In diesem Fall ist damit in der Regel eine hebelmechanische Anordnung verbunden, welche (gerade bei solchen Fahrzeugen) zusätzliche Kosten verursacht und wartungsanfällig ist.

Des Weiteren ist, obwohl die beiden Steuerungsverfahren derzeit verfügbar und realisiert werden, in einem einzelnen Nutzfahrzeug nur die Nutzung jeweils eines der beiden Steuerungsverfahren möglich, nicht jedoch die Nutzung beider Steuerungsverfahren gleichzeitig. Mit anderen Worten kann derzeit in einem einzelnen Nutzfahrzeug lediglich entweder eine nach dem Prinzip der Differenzschlupfregelung arbeitende Betriebsbremsanlage oder eine nach dem Prinzip der Drucksteuerung arbeitende Betriebsbremsanlage verbaut werden.

Die Druckschrift D1 (WO 03/011664 A1) offenbart eine Bremsanlage für Nutzfahrzeuganhänger, bei der die Bremsen einer Vorderachse des Anhängers durch ein einziges, gemeinsames ABS-Ventil angesteuert werden, das beiden Vorderachsbremsen zugeordnet ist, und das von einer primär den Hinterachsbremsen zugeordneten Druckregel- bzw. EBS-Modul einer Bremselektronik in Abhängigkeit von einem über die Raddrehzahlen ermittelten Differenzschlupf zwischen der Vorderachse und der Hinterachse angesteuert wird. Dem Druckregelmodul werden Signale von Raddrehzahlsensoren an jedem Rad und von Achslastsensoren an der Hinterachse sowie ein Steuerdruck zugeführt. Das Druckregelmodul steuert in Abhängigkeit von einer momentanen Achslastverteilung, die über mit dem Druckregelmodul verbundene Achslastsensoren ermittelt wird, Bremsdrücke entsprechend einem Fahrerwunsch ein. Das Druckregelmodul ermittelt aus einem Steuersignal eines Schlupfreglers einen gewünschten Vorderachsdruck für das ABS-Ventil der Vorderachse. Zur Bestimmung des Steuersignals werden dem Schlupfregler als Eingangsgrößen ein kompensierter Differenzschluss, ein Kurvenverhältnis, ein Radstand-Spurverhältnis-Lernsignal und ein Fahrerwunsch-Hinterachsbremsdruck zugeführt. Bei einem Fehlerfall an den Radsensoren unterbindet das Druckregelmodul bei gleich bleibenden Eingangsgrößen für den Schlupfregler die Schlupfregelung und wechselt in einen Default-Zustand.

Die Druckschrift D2 (EP 2 093 113 A1) beschreibt eine elektropneumatische Bremsanlage für Nutzfahrzeuge, die mittels einer Schaltanordnung auf einen Steuerbetrieb oder einen Regelbetrieb festlegbar ist. Eine Steuerung nimmt den Fahrerwunsch entgegen und steuert einen entsprechenden Bremsdruck in Bremszylinder ein. Die Steuerung ist mit Raddrehzahlsensoren und Achslastsensoren verbunden, wobei die Achslastsensoren permanent ein Achslastsignal an die Steuerung liefern, das während einer Bremsanforderung ausgewertet wird. Im Steuerbetrieb wird bei Vorhandensein eines Achslastsensorsignals die Betriebsbremse mittels einer Drucksteuerung gesteuert, und bei Fehlen des Achslastsensorsignals mit einer Differenzschlupfregelung gearbeitet. Im Regelbetrieb wird immer mit der Differenzschlupfregelung gearbeitet, wobei bei Vorhandensein des Achslastsensorsignals diese zur Bestimmung von Anfangswerten für eine raschere Adaptation herangezogen werden, und bei Fehlen des Achslastsensorsignals die Differenzschlupfregelung ohne solche Anfangswerte durchgeführt wird.

Die Druckschrift D3 (DE 196 21 671 A1) lehrt ein Verfahren und eine Vorrichtung zur Ermittlung und Minimierung der Koppelkraft innerhalb eines Wagenzugs, d. h. der zwischen den Teilen des Wagenzugs auftretenden Kraft, wobei die Kraft aus bereits vorhandenen Messgrößen und Messsignalen ermittelt wird. Hierzu werden in einer gut bekannten Bremsanlage, welche die Messgrößen Pedalbetätigung, Raddrehzahlen, Achslasten verarbeitet, durch Schätzalgorithmen mathematische Parameter unter Verwendung unter anderem der Messgrößen Verzögerung des Wagenzugs, erfassten Achslasten des Zugfahrzeugs, Bremsdrücke in den Radbremsen des Zugfahrzeugs geschätzt und aus diesen notwenige physikalische Parameter und Bremsenkennwerte berechnet, und sodann die Koppelkraft unter Zuhilfenahme von Impuls- und Momentbilanzen ermittelt. Mit zusätzlich dieser wird sodann der Sollbremsdruck bestimmt und an die Bremsanlage ausgegeben, wobei in Abhängigkeit von den ermittelten Kräften im Sattelpunkt über einen Regelungsalgorithmus eine Korrektur des Steuerdrucks für den Aufliegerteil des Wagenzugs vorgenommen wird, um dessen Bremsleistung entsprechend zu erhöhen oder zu verringern.

Die Druckschrift D4 (DE 198 58 583 A1) betrifft ein Verfahren und eine Vorrichtung zur Steuerung einer Bremsanlage für Nutzfahrzeuge, bei welchen Steuergrößen mittels einem Schätzverfahren mit verringerter Ermittlungszeitdauer der Schätzwerte ermittelt werden, um ungleichmäßige Bremskraftverteilungen aufgrund unterschiedlichen Bremshysteresen unterschiedlicher Bremsanlagen innerhalb eines Wagenzugs auszugleichen. Hierzu werden mehrere Messdatensätze zur Anlegedruck- und Lösedruck-Schätzung von Steuergrößen für das Anlegen und/oder Lösen der Radbremsen und/oder Ermitteln der Bremsenparameter herangezogen, die Schätzwerte auf Plausibilität und Einhaltung von Grenzwerten geprüft, und gegebenenfalls verworfen.

Die Druckschrift D5 (EP 0 943 514 A1) betrifft ein Verfahren zur Fahrdynamik-Regelung an einem Straßenfahrzeug mit einer elektropneumatischen Bremsanlage, bei dem Sollwert-Vorgaben für dynamische Zustandsgrößen des Fahrzeugs, insbesondere aufgrund der Trägheit des Fahrzeugs aus einer Simulation errechnet vorauseilende Sollwerte, dem realistischen Bewegungsverhalten des Fahrzeugs besser angenähert werden. Zur Generierung der Sollwerte werden dazu innerhalb eines Fahrzeugmodells mathematische Beziehungen, die auf Matrizengleichungen mit verschiedene Zustandsgrößen und Komponenten abbildenden Komponenten- und Zustandsvektoren beruhen, sowie aus messbaren Parametern adaptiv bestimmbare Größen mindestens einer Gesamtmasse, einer Masse eines Zugfahrzeugs, einer Masse eines Anhängerfahrzeugs, einem Radstand des Zugfahrzeugs, von Achslastverteilungen, und von Trägheitsmomenten verarbeitet.

Die Druckschrift D6 (DE 198 59 966 A1) bezieht sich auf eine Vorrichtung und ein Verfahren zur Stabilisierung eines Fahrzeuges, bei welchen mittels einer Sensorik wenigstens zwei Fahrzeugbewegungsgrößen, die die Fahrzeugbewegung, insbesondere in Fahrzeugquerrichtung, beschreiben, ermittelt werden, mittels einem Referenzmodell für jede der Fahrzeugbewegungsgrößen eine charakteristische Größe ermittelt wird, wobei das Referenzmodell einen Anpassungsteil enthält, mit dem die zeitlichen Verläufe der charakteristischen Größen an das Fahrzeugverhalten angepasst werden, und einen Regler enthält, mit dem wenigstens in Abhängigkeit der Fahrzeugbewegungsgrößen und der charakteristischen Größen Eingriffsgrößen ermittelt werden, die Aktuatoren zur Durchführung von wenigstens Bremseneingriffen und/oder Motoreingriffen, mit denen das Fahrzeug stabilisiert wird, zugeführt werden.

Vor diesem Hintergrund liegt der Erfindung als eine Aufgabe zugrunde, eine verbesserte Betriebsbremsanlage für Nutzfahrzeuge bereitzustellen, welche bei gleichzeitig höherer Robustheit in Herstellung, Betrieb und Wartbarkeit kostengünstiger und einfacher ist.

Erfindungsgemäß wird diese Aufgabe durch die kennzeichnenden Merkmale des Patentanspruchs 1 gelöst.

Der Erfindung liegt der allgemeine Gedanke zugrunde, die beiden bekannten Steuerungsverfahren für eine Betriebsbremsanlage eines Nutzfahrzeugs derart zu erweitern, dass ein resultierendes, kombiniertes Gesamtsystem in der Lage ist, eine jeweils optimale Bremsstrategie aus Drucksteuerung, Differenzschlupfregelung oder beidem selbstständig zu bestimmen, wodurch ein in seiner Funktion verbessertes, robustes und gleichzeitig ohne entsprechende Sensoren, beispielsweise Achslastsensoren, kostengünstig darstellbares elektronisch-pneumatisches Bremssystem bereitgestellt wird.

Vorteilhafte Weiterbildungen der Erfindung sind Gegenstand der beigefügten Unteransprüche.

Bevorzugt ändert die Erfassungs- und Entscheidungseinrichtung den Eingangsvektor während des Betriebs entsprechend einer geänderten Betriebssituation dynamisch.

Bevorzugt wird die Berechnung der Zwischengröße für die Bremsdruckberechnung in der Steuereinheit in Abhängigkeit von dem Eingangsvektor dynamisch auf unterschiedliche Weise durchgeführt.

Vorteilhaft beinhalten die Eingangsgrößen zumindest die Fahrzeuggeometrie beschreibende Größen, eine den Zusammenhang zwischen Bremsdruck und Bremsmoment abbildende Funktion, und/oder eine die Achslast repräsentierende Größe.

Weiter vorteilhaft beinhalten die Signalquellen einen Festwert, einen Messwert und/oder einen Schätzwert.

Bevorzugt repräsentiert die zumindest eine Zwischengröße ein Bremskraftniveau, eine Bremskraftverteilung und/oder eine Zugabstimmung.

Vorzugsweise ermittelt die zumindest eine Steuereinheit jede zumindest eine Zwischengröße mittels einem oder mehreren geeigneten Algorithmen.

Vorteilhaft sind mehrere Steuereinheiten vorgesehen, die voneinander unabhängig mehrere der Zwischengrößen ermitteln.

Bevorzugt werden Eingangsgrößen nach einer Signalvorverarbeitung der Erfassungs- und Entscheidungseinrichtung zugeführt

Vorteilhaft erzeugt in einer anfänglichen Betriebssituation die Erfassungs- und Entscheidungseinrichtung einen Eingangsvektor auf der Grundlage zumindest einer Festwert-Signalquelle.

Bevorzugt legt in einer auf die anfängliche Betriebssituation folgenden Betriebssituation die Erfassungs- und Entscheidungseinrichtung einen erzeugten Eingangsvektor in einem Speicher ab und verwendet die Erfassungs- und Entscheidungseinrichtung dann, wenn der abgelegte Eingangsvektor in einer nächsten anfänglichen Betriebssituation weiterhin Gültigkeit besitzt, den in dem Speicher abgelegten Eingangsvektor als Eingangsvektor für die nächste anfängliche Betriebssituation.

Weiter bevorzugt erzeugt in einer anfänglichen Betriebssituation die Erfassungs- und Entscheidungseinrichtung einen Eingangsvektor auf der Grundlage zumindest einer Festwert-Signalquelle, adaptiert diesen in einer auf die anfängliche Betriebssituation folgenden Betriebssituation auf einen Eingangsvektor auf der Grundlage zumindest eines Messwerts und/oder zumindest eines Schätzwerts, und verwendet in der auf die anfängliche Betriebssituation folgenden Betriebssituation den adaptierten Eingangsvektor.

Bevorzugt modifiziert bei einer Änderung der Verfügbarkeit einer Eingangsgröße die Erfassungs- und Entscheidungseinrichtung den geltenden Eingangsvektor nach einer vorbestimmten Regel (fest programmierte Logik) auf andere, verfügbare Eingangsgrößen.

Bevorzugt erzeugt bei einer Änderung der Verfügbarkeit einer Eingangsgröße dann, wenn mehrere alternative geeignete Eingangsvektoren zur Verfügung stehen, die Erfassungs- und Entscheidungseinrichtung durch Erfassen des Ist-Zustands des Fahrzeugs und Anwenden zumindest einer vorbestimmten Regel einen neuen geeigneten Eingangsvektor.

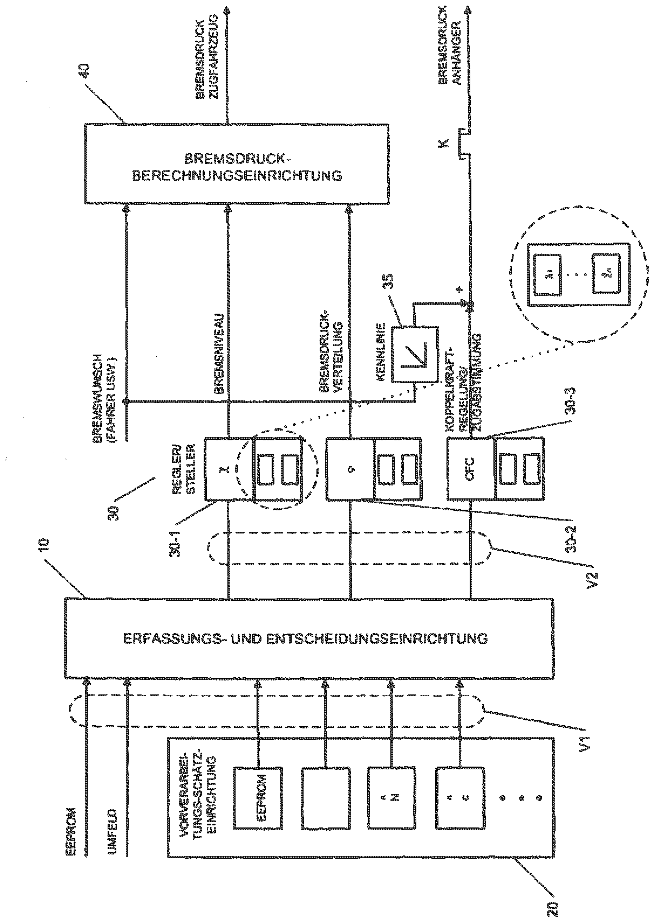

Die Erfindung wird nachstehend anhand eines bevorzugten Ausführungsbeispiels unter Bezugnahme auf die Zeichnung näher beschrieben. Es zeigt:
Die einzige Figur (Fig. 1) eine schematische Darstellung eines Ausschnitts eines steuernden und regelnden Teils einer elektronisch-pneumatischen Betriebsbremsanlage eines Nutzfahrzeugs gemäß einem Ausführungsbeispiel der Erfindung.

Derzeit kommen in Nutzfahrzeugen mit oder ohne Anhänger an sich bekannte Betriebsbremsanlagen zum Einsatz, welche entweder nach einem hierin als Drucksteuerung bezeichneten Prinzip oder nach einem hierin als Differenzschlupfregelung bezeichneten Prinzip arbeiten. Der Fachmann verwendet die Begriffe "Drucksteuerung" und "Differenzschlupfregelung" zwar nicht einheitlich, auch sind diese nicht normiert, sie beschreiben jedoch die jeweils zugrunde liegenden Prinzipien für den Fachmann verständlich und eindeutig.

Bei einer Drucksteuerung erfolgt beispielsweise die Bremskraftverteilung eines Nutzfahrzeugs basierend auf einer Achslastmessung. Hierbei wird die Achslast bei luftgefederten Fahrzeugen über etwa einen Luftfederbalg-Drucksensor ermittelt, oder bei stahlgefederten Fahrzeugen über Weg messende, d. h. den Abstand zwischen dem Fahrzeugrahmen und einer Achse messende, Sensoren gemessen.

Vorzugsweise wird die Last der Antriebsachse erfasst und als weitere Größe die Masse des Gesamtfahrzeugs ermittelt. Mit diesen Eingangsgrößen werden die Achslasten der nicht sensierten Achsen berechnet. Entsprechend der ermittelten Achslast wird jeder Achse eine festgelegte Bremskraft zugeordnet und unter Verwendung eines entsprechenden Bremsdrucks durch das elektro-pneumatische Bremssystem in die einzelnen Radbremsen eingesteuert.

Des weiteren finden bei der Drucksteuerung Bremsenkennwerte Eingang, welche beispielsweise für eine jeweilige Anwendung in Fahrversuchen oder auf der Grundlage von Kennlinien ermittelt und als feste Werte, etwa während der Herstellung (EOL; End of Line) in einem Speichermittel abgelegt werden.

Obwohl mit einer Drucksteuerung gute Resultate erzielbar sind, ist der Aufwand fahrzeugabhängig und auf die erforderliche Rechenleistung, Präzision und Geschwindigkeit bezogen insbesondere für Kleinserienfahrzeuge oder Spezial- bzw. Nischenfahrzeuge hoch.

Erfolgt die Bremskraftverteilung auf der Grundlage einer Differenzschlupfbetrachtung und der Annahme, dass das Verhältnis zwischen der Aufstandskraft und der Bremskraft an Rädern mit gleichem Schlupf ebenfalls gleich ist, so wird zunächst sichergestellt, dass jedes Rad die seiner Aufstandskraft entsprechende Bremskraft überträgt. Die in die einzelnen Radbremsen einzusteuernden Bremsdrücke werden nun so lange angepasst, bis eine Schlupfdifferenz nicht länger feststellbar ist.

Die bei der Drucksteuerung benötigte Achslast kann bei der Differenzschlupfregelung auch entweder geschätzt oder durch geeignete andere Kenngrößen ersetzt werden, bzw. kann der Differenzschlupf selbst ein Maß für die Achslast sein. Ändert sich jedoch die Achslast bei einem nach dem Differenzschlupfprinzip gebremsten Fahrzeug häufig, sind ebenso häufig Adaptionsphasen erforderlich. Dies führt zu einem für den Fahrer jedes Mal neuen, anderen, unangenehmen Bremspedalgefühl, welches insbesondere bei Nischen- und Spezialfahrzeugen, wie etwa Schwerlastfahrzeugen und dergleichen, störend zutage tritt. Ferner kann die Adaption bei bestimmten Fahrzeuggeometrien und/oder Fahrzeugen fehlschlagen, beispielsweise bei sich stark angleichenden Achslasten, in welchem Fall ein Differenzschlupf nur unzureichend auftritt und aufgrund der kaskadierten Regelkreise bzw. Vermaschung derselben nur unzureichend auswertbar ist. In diesem Fall müsste eine auf dem Differenzschlupfprinzip arbeitende Betriebsbremsanlage gegebenenfalls verstärkt auf der Grundlage von Basiswerten arbeiten, woraus beispielsweise bedingt durch die Vermaschung bzw. Kaskadierung der einzelnen Regelkreise eine achsweise Überbremsung/Unterbremsung des Nutzfahrzeugs und damit verbunden hoher Bremsbelagverschleiß resultieren können.

Idealerweise überwindet eine Betriebsbremsanlage, die auf eine Kombination aus einer Drucksteuerung und einer Differenzschlupfregelung mit den zugrundeliegenden Teilsteueralgorithmen zurückgreifen und in Abhängigkeit von einer Fahrsituation und/oder einer Geometrie und/oder von Umwelteinflüssen erforderliche Eingangssignale zur Berechnung adhäsionsoptimaler, d. h. eine jeweils bestmögliche Bremsleistung erbringende, Betriebsbremsdrücke belegt, die Probleme der beiden Einzelsysteme und stellt ein verbessertes kombiniertes elektro-pneumatisches Bremssystem bereit.

Insbesondere kann aufgrund der Kombination und der Auswahl aus zur Verfügung stehenden Berechnungs-"Algorithmen" und aus unterschiedlichen Mess- und Eingangssignalen zusammensetzbaren Eingangssignalvektoren in Abhängigkeit von einer Fahrsituation und/oder einer Geometrie und/oder von Umwelteinflüssen beispielsweise eine geeignete Steuereinrichtung eines elektronischen Bremssystems a) Erfassen, welche Fahrsituation, Geometrie und/oder Umweltsituation vorliegt, und b) sich auf dieser Grundlage für zumindest einen bestimmten Algorithmus *und* einen bestimmten Eingangsvektor entscheiden und sodann die notwendigen Bremsdrücke optimal berechnen. Beispielsweise werden von der Steuereinrichtung bzw. Erfassungs- und Entscheidungseinrichtung mehrere mögliche Algorithmen auf Durchführbarkeit überhaupt geprüft, nicht durchführbare Algorithmen verworfen, und sodann die Entscheidung zugunsten des besten der durchführbaren Algorithmen getroffen. Selbstverständlich besteht hierauf keine Beschränkung, sondern es sind andere Durchführbarkeitskriterien denkbar.

In anderen Worten wird somit eine weitere, zusätzliche Erfassungs- und Entscheidungseinrichtung oder -ebene über die bisher bekannten Steuerungen und/oder Regelungen installiert, welche die dort, gegebenenfalls parallel, erfolgenden Teilentscheidungen oder -berechnungen zu einer optimiert kombinierten tatsächlichen Fahrzeug-Gesamtentscheidung oder -berechnung koordiniert. Diese Fahrzeug-Gesamtenscheidung ist selbstverständlich für einzelne Nutzfahrzeuge, Zugfahrzeuge ohne Anhänger und Zugfahrzeuge mit Anhängern möglich und als solche in keiner Weise auf bestimmte Fahrzeuge beschränkt.

Die Figur zeigt eine schematische Darstellung eines Ausschnitts eines steuernden und regelnden Teils einer elektronisch-pneumatischen Betriebsbremsanlage eines Nutzfahrzeugs gemäß einem Ausführungsbeispiel der Erfindung. Ein solcher steuernder und regelnder Teil ist vorwiegend in einer zentralen elektronischen Steuereinrichtung oder Steuereinheit eines elektronischen Bremssystems angeordnet und mit entsprechenden Sensoren und Teil- bzw. Subsystemen des elektronischen Bremssystems verbunden.

Eine solche zentrale Steuereinheit weist zumindest eine darin integrierte Berechnungseinheit beispielsweise in Form eines Mikrocomputers auf. Ferner sind dezentral sogenannte elektronische Drucksteuer- bzw. Druckregelmodule vorgesehen, die jeweils einer Radbremse eines Nutzfahrzeugs zugeordnet sind. Die zentrale Steuereinheit ist über ein Kommunikationssystem, z. B. einen CAN-Bus, mit den elektronischen Druckregelmodulen verbunden. Die zentrale Steuereinheit ist ferner mit einem Bremswertgeber verbunden. Außerdem ist zur Steuerung einer Anhängerbremsanlage ein Anhängersteuermodul vorgesehen, welches über das Kommunikationssystem mit der zentralen Steuereinheit verbunden ist. Dabei ist im Bereich des Anhängersteuermoduls üblicherweise wenigstens ein Drucksensor vorgesehen, der den Druck in der pneumatischen Steuerleitung zum Anhänger erfasst.

Der pneumatische Teil der Bremsanlage, der einen Notbremskreis zur pneumatischen Betätigung der Radbremsen aufweisen kann, besteht aus mehreren Vorratsdruckbehältern. Die den Radbremsen der Vorderachse zugeordneten Druckregelmodule werden mit einem aus einem der Vorratsdruckbehälter stammenden Vorratsdruck versorgt. Das Anhängersteuermodul verfügt meist über einen eigenen zugeordneten Vorratsdruckbehälter. Die Druckregelmodule, die den Radbremsen der Hinterachse des Nutzfahrzeugs zugeordnet sind, werden in der Regel aus einem weiteren Vorratsbehälter mit Vorratsdruck versorgt.

Im Betrieb der elektronisch-pneumatischen Bremsanlage wird der zentralen Steuereinheit vom Bremswertgeber ein Signal als Maß für den Betätigungsgrad des Bremspedals zugeführt. In der zentralen Steuereinheit wird dieses Signal verarbeitet und werden daraus gegebenenfalls unter Berücksichtigung weiterer Betriebsgrößen wie Fahrzeugverzögerung usw., Solldruck-, Sollbremsmoment-, Sollkraft- oder Sollschlupfwerte für die einzelnen Radbremsen bzw. für den Anhänger nach Maßgabe vorgegebener Kennlinien bzw. Kennfelder bestimmt. Diese Sollwerte werden über das Kommunikationssystem den einzelnen elektronischen Druckregelmodulen sowie dem Anhängersteuermodul zugeführt, welche den Druck in den einzelnen Radbremsen bzw. der Steuerleitung zur Bremsanlage des Anhängers entsprechend der Sollwertvorgabe einsteuern.

Die vom Beladungszustand des Nutzfahrzeugs abhängige Achslast ist hierbei mittels verschiedener Algorithmen zur Schätzung der Achslast berechenbar bzw. schätzbar, in welchen die Achslasten eines Nutzfahrzeugs indirekt aus anderen, nicht beladungsbezogenen Größen bestimmt bzw. abgeschätzt werden können. Ein bekanntes Verfahren nutzt beispielsweise in einer Differenzdruckregelung für die Berechnung der Achslasten über die Aufstandskraft von Rädern Signale aus Fahrstabilitätssystemen oder Antiblockiersystemen des Nutzfahrzeugs. Eine weitere Möglichkeit besteht darin, von Radgeschwindigkeitssensoren und abgeleitete und ebenfalls den elektronischen Druckregelmodulen zugeführte Radgeschwindigkeits- bzw. Raddrehzahlsignale zur Achslastschätzung auszuwerten. Hierzu sind die Radgeschwindigkeitssensoren beispielsweise an jeder Achse angeordnet, ohne hierauf beschränkt zu sein, erfassen die Geschwindigkeit der Räder der jeweiligen Achse, welche eine angetriebene und/oder eine nicht angetriebene Achse sein kann, und leiten diese an ein Steuergerät weiter, welches eine elektronische Achslast-Berechnungseinrichtung beinhaltet. Bei diesen Radgeschwindigkeitssensoren handelt es sich etwa um Sensoren, welche im Rahmen von fahrzeugbezogenen Regelsystemen, beispielsweise Fahrstabilitätsregelsystemen oder Antiblockiersystemen, bereits vorhanden sind. Es wird angemerkt, dass das Steuergerät Teil des elektronischen Druckregelmoduls oder die elektronische Steuereinheit selbst sein kann, und dass die Verarbeitung rechnergestützt mittels zumindest einem jeweiligen Mikroprozessor in dem Steuergerät erfolgt.

In einer Ausführungsform werden die Achslasten der angetriebenen Hinterachse eines Nutzfahrzeugs berechnet und/oder geschätzt, insbesondere bei einer Sattelzugmaschine mit zwei Achsen, von welchen nur die hintere Achse angetrieben ist. Die Erfindung jedoch nicht hierauf beschränkt, und eine Ermittlung der Achslasten kann auslegungsabhängig gleichfalls an einer anderen Achse oder an allen Achsen eines Nutzfahrzeugs mit oder ohne Anhänger bzw. Auflieger erfolgen. Vorteilhaft kann es auch sein, einen die berechneten bzw. geschätzten Achslasten einschließenden zulässigen Bereich oder Toleranzbereich derart vorzusehen, dass die tatsächlichen Achslasten sicher innerhalb dieses Bereiches liegen und die berechneten bzw. geschätzten Achslasten diesen tatsächlichen Achslasten durch Plausibilitätsprüfungen weiter angenähert werden. Die Genauigkeit der berechneten bzw. geschätzten Achslasten hängt dabei wesentlich von der Genauigkeit der verwendeten Eingangsgrößen der Achslastschätzung ab, welche gegebenenfalls durch geeignete Mittelwertbilder oder Filter verbessert werden kann.

Alternativ sind nicht nur die vorstehend beschriebene Kombination aus einer elektronisch-pneumatischen Betriebsbremsanlage mit Drucksteuerung, d. h. einer solchen ohne Differenzschlupfregelung, und der Berechnung bzw. Schätzung der Achslast(en), d.h. einer Größe, die die Beladung repräsentiert, sondern auch eine Kombination aus einer solchen Drucksteuerung und einer Berechnung bzw. Schätzung von geeigneten Bremsenkennwerten, beispielsweise Reibwerten der Bremsbeläge und der Bremsscheiben der Radbremse oder einer Beziehung zwischen dem an der Radbremse ausgeübten Bremsmoment bzw. der ausgeübten Bremskraft und dem eingesteuerten Bremsdruck, d.h. die Konstanten, die für die Radbremsen den Zusammenhang zwischen Steuergröße und Zuspannkraft beschreiben, eine Kombination aus einer solchen Drucksteuerung und einer Berechnung bzw. Schätzung von Anlegedrücken der Bremsbeläge an die Radbremsen bzw. Gruppen von Radbremsen, d.h. die Steuergrößen, die benötigt werden, um die Bremsbeläge an die Bremsscheiben bzw. die Bremstrommeln anzulegen, bzw. die entsprechende Lösesteuergrößen, oder Kombinationen einer oder mehrerer dieser Ansätze darstellbar. Dies ist insbesondere dann möglich, wenn bereits in dem Nutzfahrzeug installierte Subsysteme über Sensoren verfügen, die geeignete Mess- bzw. Eingangsgrößen für die Schätzberechnung erfassen und an eine Verarbeitungseinrichtung in einem Steuergerät liefern, und die Verarbeitungseinrichtung diese Mess- bzw. Eingangsgrößen zur erfindungsgemäßen Verwendung speichert und/oder vorhält.

Darüber hinaus kann das auf der Berechnung und/oder Schätzung der Achslasten oder einer Kombination wie vorstehend basierende Einsteuern von Bremsdrücken so ausgelegt werden, dass es in einer regelmäßigen elektronisch-pneumatischen Bremsanlage mit Drucksteuerung und Achslastsensoren als eine Sicherungs- bzw. Rückfallebene für einen Fehlerfall beispielsweise der Achslastsensoren und/oder in Form eines Plausibilitäts- und Gegenkontrollprüfung in einem Nutzfahrzeug bereitgestellt wird, so dass sich die Betriebsfähigkeit eines Nutzfahrzeugs, beispielsweise eines solchen zum Transport von Gefahrgütern, ohne zusätzlichen Materialaufwand, dabei gleichzeitig robust und kostengünstig, erhöht. Ferner kann die Robustheit bei Verwendung der Drucksteuerung durch zusätzliche Adaption von Bremsenparametern weiter erhöht werden.

Die grundlegenden Funktionen des elektronischen Bremssystems, der Sensoren und der Teil- bzw. Subsysteme sind an sich bekannt und werden daher hierin nicht weiter beschrieben.

Erfindungsgemäß werden die beiden bekannten Steuerungs- und Regelungsverfahren für eine Betriebsbremsanlage eines Nutzfahrzeugs nun derart erweitert, dass ein resultierendes, kombiniertes Gesamtsystem in der Lage ist, durch - in einem jeweiligen Zeitpunkt - Treffen einer optimalen Auswahl aus zur Verfügung stehenden Verfahren, Berechnungsmitteln (Algorithmen) und Eingangsgrößen, wobei mehrere Eingangsgrößen einen so genannten Eingangsvektor bilden, eine jeweils optimale Bremsstrategie aus Drucksteuerung, Differenzschlupfregelung oder beidem selbstständig zu bestimmen, wodurch ein in seiner Funktion verbessertes, robustes und gleichzeitig durch Wegfall entsprechender Sensoren, beispielsweise Achslastsensoren, kostengünstig darstellbares elektronisch-pneumatisches Bremssystem bereitgestellt wird.

Eine wesentliche Bedeutung kommt hierbei einer in der Figur vereinfacht dargestellten Erfassungs- und Entscheidungseinrichtung 10 zu. Die Erfassungs- und Entscheidungseinrichtung 10 erhält als Eingangssignale Daten, Werte und Größen, die aus einem Festspeicher, beispielsweise einem End of Line-programmierten EEPROM mit so genannten Standard- oder Default-Werten, oder Anfangswerten, für Kennwerte, oder aus erfassten Umweltbedingungen oder -situationen, oder aus einer Vorverarbeitungseinrichtung 20 stammen. Die Festspeicher- bzw. EEPROM-Werte sind so festgelegt und abgesichert, dass sie für einen Anlaufbetrieb, einen Notlaufbetrieb oder einen sicheren Rückfallbetrieb herangezogen werden können.

Auch die Vorverarbeitungseinrichtung 20 kann wiederum einen Festspeicher bzw. ein EEPROM beinhalten, welches wiederum Standard-, Default- oder Anfangswerte für vorzuverarbeitende Parameter enthalten kann. In der Vorverarbeitungseinrichtung 20 wird eine Schätzung bzw. Berechnung von für einen Bremsvorgang relevanten Parametern aus unterschiedlichen Signalquellen des Nutzfahrzeugs während dessen Betriebs durchgeführt. Solche Parameter sind beispielsweise ein Bremskennwert cₓ für eine Achse X der Achsen des Nutzfahrzeugs, d. h. eine Funktion, welche den Zusammenhang zwischen dem Bremsdruck und dem Bremsmoment abbildet, eine Aufstands- bzw. Normalkraft Nₓ für eine Achse X der Achsen des Nutzfahrzeugs, d. h. eine Achslast der Achse X, und dergleichen. Die Parameter sind hierbei jedoch nicht auf die beiden vorgenannten Parameter beschränkt, sondern es können bedarfsweise weitere Parameter erfasst und/oder ermittelt werden, oder bereits an dieser Stelle eine Auswahl aus verfügbaren Parametern getroffen werden. Vorzugsweise ist für jeden in der Vorverarbeitungseinrichtung 20 zu berücksichtigenden Parameter ein jeweiliger Standard- oder Default-Wert auch in dem End of Line-EEPROM außerhalb der Vorverarbeitungseinrichtung 20 hinterlegt.

Somit bildet eine Reihe von Parametern, die der Erfassungs- und Entscheidungseinrichtung 10 zu einem jeweiligen Zeitpunkt zugeführt werden, einen Vektor von Eingangsparametern bzw. einen ersten Eingangsvektor V1, und erfasst die Erfassungs- und Entscheidungseinrichtung 10 dadurch diese Eingangsgrößen aus unterschiedlichen Signalquellen als Grundlage für eine zu treffende Entscheidung im Hinblick auf eine Bremsdruckberechnung.

Aus den erfassten Eingangsgrößen des ersten Eingangsvektors V1 ermittelt die Erfassungs- und Entscheidungseinrichtung 10 sodann in Abhängigkeit von der Verfügbarkeit und dem Wert der Elemente des ersten Eingangsvektors V1 einen zweiten Eingangsvektor V2 für eine Steuereinheit 30 zur Ermittlung zumindest einer Zwischengröße für eine Bremsdruckberechnung. Der zweite Eingangsvektor V2 enthält zumindest eine Eingangsgröße, wobei der zweite Eingangsvektor V2 durch die Erfassungs- und Entscheidungseinrichtung 10 in Abhängigkeit von einer Betriebssituation oder Verfügbarkeit der Eingangsgrößen erzeugt wird.

Beispielsweise kann ein Sensor als Signalquelle für die Vorverarbeitungseinrichtung 20 ausgefallen sein. In diesem Fall ist die Position dieses Parameters in dem ersten Eingangsvektor V1 nicht belegt, oder auf eine einen solchen Ausfall kennzeichnende Art und Weise belegt. Der erste Eingangsvektor V1 wird dadurch nun nicht vollständig ungültig, sondern es wird der Inhalt des ersten Eingangsvektors V1 durch die Erfassungs- und Entscheidungseinrichtung 10 analysiert und entsprechend dieser Analyse ein geeigneter zweiter Eingangsvektor V2 erstellt bzw. erzeugt, welcher dem Ausfall des Sensors Rechnung trägt und daher anders aussieht als ein zweiter Eingangsvektor V2 im fehlerfreien Fall.

Mit anderen Worten verfügt die Erfassungs- und Entscheidungseinrichtung 10 über Mittel, welche - in einer ersten Stufe - je nach erstem Eingangsvektor V1 einen geeigneten zweiten Eingangsvektor V2 formen, d. h. erzeugen. Hierdurch kann die Erfassungs- und Entscheidungseinrichtung 10 den zweiten Eingangsvektor V2 für die Steuereinheit 30 während des Betriebs des Nutzfahrzeugs entsprechend einer geänderten Betriebssituation dynamisch ändern.

Eine zweite Stufe der Anpassung ist in der Steuereinheit 30 vorgesehen. Die Steuereinheit 30 besteht in diesem Ausführungsbeispiel aus drei Regeleinrichtungen und/oder Stelleinrichtungen für den Grad der Stärke einer Bremsung, d. h. das Bremsniveau χ, die Verteilung des Bremsdrucks auf die Radbremsen ϕ, und eine Koppelkraftregelung (CFC, Coupling Force Control) zur Abstimmung eines Nutzfahrzeugzugs. Für jede dieser Funktionen bzw. Komponenten kann End of Line festgelegt werden, welche Eingangsgrößen verwendet werden. Beispielsweise kann konfiguriert werden, dass immer End of Line-Eingangsgrößen zu verwenden sind, oder dass immer Schätzwerte zu verwenden sind, oder dass im Normalfall End of Line-Eingangsgrößen zu verwenden sind und die Schätzwerte als eine Rückfallebene zur Verfügung stehen für den Fall, dass ein Heranziehen der End of Line-Werte nicht möglich ist.

Die Steuereinheit 30 berechnet jeweils einen Zwischenwert für jede dieser drei Komponenten, welcher sodann auf an sich bekannte Art und Weise in Verbindung mit einem Fahrerwunsch in einer Bremsdruck-Berechnungseinrichtung 40 in einen Bremsdruck für ein Zugfahrzeug und gegebenenfalls mittels einer Vorsteuerung über eine geeignete Kennlinie 35 in einen Bremsdruck für einen Anhänger, der an einer Kupplung K angekuppelt sein kann, entwickelt wird.

In jeder von Teil-Steuereinheiten 30-1 für das Bremsniveau χ, 30-2 für die Bremsverteilung ϕ und 30-3 für die Zugabstimmung sind hierbei eine Vielzahl von Berechnungs- oder Steuerverfahren hinterlegt (wie in der Figur durch die Ausschnittvergrößerung für Bremsniveaus χ₁ bis χₙ angedeutet; entsprechendes gilt für Bremsdruckverteilungen ϕ₁ bis ϕₙ und Zugabstimmungen CFC₁ bis CFCₙ, die nicht dargestellt sind), welche je nach Inhalt des zweiten Eingangsvektors V2 angesprochen bzw. ausgewählt werden können. Die Steuereinheit 30 kann daher jeden der Zwischenwerte bzw. jede der Zwischengrößen für die Bremsdruckberechnung in Abhängigkeit von dem zweiten Eingangsvektor V2 dynamisch auf unterschiedliche Weise berechnen.

Wie vorstehend bereits beschrieben wurde, beinhalten die durch den zweiten Eingangsvektor V2 zugeführten Eingangsgrößen der Steuereinheit 30 bevorzugt, jedoch nicht darauf beschränkt, zumindest die Fahrzeuggeometrie beschreibende Größen, eine den Zusammenhang zwischen Bremsdruck und Bremsmoment abbildende Funktion, und/oder eine die Achslast repräsentierende Größe. Die die Achslast repräsentierende Größe wird rechnerisch aus Signalen und/oder Werten anderer Quellen ermittelt, so dass ein dedizierter Achslastsensor nicht benötigt wird. Als Signalquellen für die Berechnung der Zwischengröße stehen allgemein Festwerte, Messwerte und/oder Schätzwerte zur Verfügung, und die Zwischengröße repräsentiert ein Bremskraftniveau, eine Bremskraftverteilung und/oder eine Zugabstimmung.

Insbesondere ermittelt die Steuereinheit 30 jede Zwischengröße mittels einem oder mehreren geeigneten Algorithmen. Da in jeder der Teil-Steuereinheiten 30-1 bis 30-3 mehrere Algorithmen hinterlegt sein können, kann diese Ermittlung so erfolgen, dass mit dem ersten Eingangsvektor V1 ein zu verwendender Algorithmus bereits mit an die Steuereinheit 30 übergeben wird, so dass die Steuereinheit 30 eine bedingte Berechnungsanweisung erhält. In diesem Fall übernimmt die Erfassungs- und Entscheidungseinrichtung 10 die Aufgabe, einen hinsichtlich erforderlicher Rechenzeit und gewünschter Genauigkeit der resultierenden Zwischengröße optimal geeigneten Algorithmus festzulegen. Alternativ ist es jedoch auch möglich, die Vorgaben für die Steuereinheit 30 unterschiedlich zu priorisieren, beispielsweise "eine schnellstmögliche Berechnung" oder "eine größte Genauigkeit" vorzugeben, und der Steuereinheit 30, beispielsweise entsprechend ihrer Rechenleistung oder Auslastung, beschränkt oder unbeschränkt die Auswahl eines der jeweils zur Verfügung stehenden Algorithmen zu überlassen. Hierzu ist die Steuereinheit 30 in mehrere Teil-Steuereinheiten 30-1 bis 30-3 unterteilt, räumlich getrennt oder mit mehreren Recheneinheiten integriert, die voneinander unabhängig mehrere der Zwischengrößen ermitteln.

In einem Anfangszustand, beispielsweise bei Beginn des Betriebs des Nutzfahrzeugs oder während eines Diagnosebetriebs im Wartungsfall, erzeugt in einer solchen anfänglichen Betriebssituation die Erfassungs- und Entscheidungseinrichtung 10 einen Eingangsvektor auf der Grundlage zumindest einer Festwert-Signalquelle, etwa dem EEPROM, und lernt bzw. adaptiert das System sodann im laufenden Betrieb. Dies bietet den Vorteil, dass eine Startphase kurz gehalten werden kann, und das System bereits für einen vorgesehenen Einsatzzweck, wie etwa einen bereits bekannten Regelbeladungszustand oder eine bereits bekannte Umweltsituation bei Nischenfahrzeugen, gut vorangepasst werden kann.

In einer auf die anfängliche Betriebssituation folgenden Betriebssituation ist die Erfassungs- und Entscheidungseinrichtung 10 in der Lage, wobei dies beispielsweise in der Erfassungs- und Entscheidungseinrichtung 10 festgelegt sein oder über einen entsprechenden Fahrerwunsch ausgelöst werden kann, einen erzeugten Eingangsvektor in einem Speicher abzulegen und dann, wenn der abgelegte Eingangsvektor in einer nächsten anfänglichen Betriebssituation weiterhin Gültigkeit besitzt, den abgelegten Eingangsvektor als Eingangsvektor für die nächste anfängliche Betriebssituation erneut zu verwenden. Wird ein Nutzfahrzeug beispielsweise in einem bestimmten Beladungszustand oder in einer bestimmten Umweltsituation mit gleichbleibender Fahrzeuggeometrie abgestellt und sein Betrieb lediglich unterbrochen, etwa für eine Ruhezeit des Fahrers, so kann hierdurch ein erneutes Zurückgreifen auf Anfangswerte und ein erneutes Adaptieren vermieden werden. Dies bietet den erheblichen Vorteil, dass das Fahrzeug rascher erneut betriebsbereit ist. Ferner bleibt für denselben Fahrer der zuletzt empfundene Eindruck des Fahrzeugverhaltens erhalten und entfällt oder verkürzt sich eine Neugewöhnungsphase für den Fahrer.

Alternativ, und dies kann beispielsweise ebenfalls in der Erfassungs- und Entscheidungseinrichtung 10 festgelegt sein oder ebenfalls über einen entsprechenden Fahrerwunsch ausgelöst werden, erzeugt in der anfänglichen Betriebssituation die Erfassungs- und Entscheidungseinrichtung 10 einen Eingangsvektor auf der Grundlage zumindest einer Festwert-Signalquelle, und adaptiert in einer auf die anfängliche Betriebssituation folgenden Betriebssituation auf einen Eingangsvektor auf der Grundlage zumindest eines Messwerts und/oder zumindest eines Schätzwerts und verwendet sodann den adaptierten Eingangsvektor. Hierdurch wird sichergestellt, dass das Nutzfahrzeug jeweils in einer beispielsweise sicheren Konfiguration den Betrieb aufnimmt, unabhängig von der letzten Adaption und dergleichen, und unabhängig von während einer Betriebsunterbrechung eingetretenen Ereignissen. Außerdem findet jeder Fahrer des Nutzfahrzeugs einen definierten Anfangszustand vor.

Insbesondere modifiziert bei einer Änderung der Verfügbarkeit einer Eingangsgröße die Erfassungs- und Entscheidungseinrichtung den geltenden zweiten Eingangsvektor V2 nach einer vorbestimmten Regel, die beispielsweise als fest programmierte bzw. verdrahtete Logik in der Erfassungs- und Entscheidungseinrichtung 10 vorgesehen ist, auf andere, verfügbare Eingangsgrößen. Fällt beispielsweise eine Signalquelle einer Eingangsgröße aus, oder ist eine solche nach einer Änderung der Fahrzeuggeometrie nicht mehr oder noch nicht vorhanden, so bildet diese Modifikation eine Rückfallmöglichkeit unter Verwendung nun (noch) zur Verfügung stehender Eingangsgrößen. Stehen bei einer Änderung der Verfügbarkeit einer Eingangsgröße mehrere alternative geeignete Eingangsvektoren zur Verfügung, erfasst die Erfassungs- und Entscheidungseinrichtung 10 den Ist-Zustand des Fahrzeugs und erzeugt durch Anwenden zumindest einer vorbestimmten Regel einen neuen geeigneten zweiten Eingangsvektor V2.

Insgesamt werden somit dadurch, dass Unterfunktionen in einem Bremssystem, die Eingangsparameter brauchen, welche End of Line programmierbar sind oder in Abhängigkeit von einer Umweltsituation umgeschaltet werden, durch eine Berechnung oder Schätzung unter Verwendung von in einem Nutzfahrzeug unabhängig von dem tatsächlichen Beladungszustand bzw. der Fahrzeugmasse ermittelten Größen, durch welche eine Unabhängigkeit von diesem tatsächlichen Beladungszustand bzw. dieser tatsächlichen Fahrzeugmasse erzielt wird und damit hierfür erforderliche Lastsensoren entfallen können, durch Verwenden eines bestimmten Algorithmus in Verbindung mit einem bestimmten Eingangsvektor die Vorteile des nach dem Prinzip der Differenzschlupfregelung arbeitenden elektropneumatischen Bremssystems und des nach dem Prinzip der Drucksteuerung arbeitenden elektro-pneumatischen Bremssystems vereint.

Modifikationen, die zu der detaillierten Beschreibung der Erfindung hierin ähnlich sind, sind für den Fachmann ohne Weiteres ersichtlich und sind daher nicht als Abweichen vom Gegenstand der Erfindung wie in den nachfolgenden Patentansprüchen definiert zu werten.

## Patentansprüche

1. Kombiniertes elektro-pneumatisches Bremssystem,
das eine Drucksteuerung und eine Differenzschlupfregelung kombiniert, beinhaltend:
eine Erfassungs- und Entscheidungseinrichtung (10), die zur Verfügung stehende Eingangsgrößen aus zur Verfügung stehenden unterschiedlichen Signalquellen als Teil eines ersten Eingangsvektors (10) erfasst; und
zumindest eine Steuereinheit (30) zur Ermittlung zumindest einer Zwischengröße für eine Bremsdruckberechnung,
welcher ein zumindest eine Eingangsgröße enthaltender zweiter Eingangsvektor (V2) von der Erfassungs- und Entscheidungseinrichtung (10) zugeführt wird,
eine Vorverarbeitungseinrichtung (20) vorgesehen ist, welche eine achslastsensorsignalfreie Berechnung von für einen Bremsvorgang relevanten Parametern durchführt und als weiteren Teil des ersten Eingangsvektors (V1) der Erfassungs- und Entscheidungseinrichtung (10) zuführt; und
die Erfassungs- und Entscheidungseinrichtung (10) die in dem zweiten Eingangssignalvektor (V2) enthaltene, zumindest eine Eingangsgröße aus den in dem ersten Eingangssignalvektor (V1) enthaltenen Eingangsgrößen in Abhängigkeit von der erfassten Betriebssituation oder
einer Verfügbarkeit der Eingangsgrößen erzeugt,
gleichzeitig aus einer Mehrzahl von in Abhängigkeit von
der erfassten Betriebssituation oder
der Verfügbarkeit der Eingangsgrößen zur Verfügung stehenden Berechnungsmitteln und in Zuordnung zu der in dem zweiten Eingangssignalvektor (V2) enthaltenen, zumindest einen Eingangsgröße zumindest ein durchführbares Berechnungsmittel auswählt, und
die Steuereinheit (30) für die Bremsdruckberechnung die zumindest eine Zwischengröße unter Verwendung des zumindest einen ausgewählten, durchführbaren Berechnungsmittels in Abhängigkeit von dem Inhalt des zweiten Eingangsvektors (V2) berechnet,
**dadurch gekennzeichnet, dass**
die Erfassungs- und Entscheidunqseinrichtunq (10) ausgebildet ist, um den Inhalt des ersten Eingangsvektors (V1) zu analysieren und entsprechend dieser Analyse einen geeigneten zweiten Eingangsvektor (V2) zu erstellen oder erzeugen, welcher dem Ausfall eines Sensors als Siqnalquelle für die Vorverarbeitungseinrichtung (20) Rechnung trägt und daher anders aussieht als ein zweiter Eingangsvektor (V2) im fehlerfreien Fall.

2. Elektro-pneumatisches Bremssystem nach Anspruch 1, **dadurch gekennzeichnet, dass** die Erfassungs- und Entscheidungseinrichtung (10) den Eingangsvektor (V2) während des Betriebs entsprechend einer geänderten Betriebssituation dynamisch ändert.

3. Elektro-pneumatisches Bremssystem nach einem der vorangehenden Ansprüche, **dadurch gekennzeichnet, dass** die Berechnung der Zwischengröße für die Bremsdruckberechnung in der Steuereinheit (30) in Abhängigkeit von dem Eingangsvektor (V2) dynamisch auf unterschiedliche Weise durchgeführt wird.

4. Elektro-pneumatisches Bremssystem nach einem der vorangehenden Ansprüche, **dadurch gekennzeichnet, dass** die Eingangsgrößen zumindest die Fahrzeuggeometrie beschreibende Größen, eine den Zusammenhang zwischen Bremsdruck und Bremsmoment abbildende Funktion, und/oder eine die Achslast repräsentierende Größe beinhalten.

5. Elektro-pneumatisches Bremssystem nach einem der vorangehenden Ansprüche, **dadurch gekennzeichnet, dass** die Signalquellen einen Festwert, einen Messwert und/oder einen Schätzwert beinhalten.

6. Elektro-pneumatisches Bremssystem nach einem der vorangehenden Ansprüche, **dadurch gekennzeichnet, dass** die zumindest eine Zwischengröße ein Bremskraftniveau, eine Bremskraftverteilung und/oder eine Zugabstimmung repräsentiert.

7. Elektro-pneumatisches Bremssystem nach einem der vorangehenden Ansprüche, **dadurch gekennzeichnet, dass** die zumindest eine Steuereinheit (30) jede zumindest eine Zwischengröße mittels einem oder mehreren geeigneten Algorithmen ermittelt.

8. Elektro-pneumatisches Bremssystem nach einem der vorangehenden Ansprüche, **dadurch gekennzeichnet, dass** mehrere Steuereinheiten (30-1, 30-2, 30-3) vorgesehen sind, die voneinander unabhängig mehrere der Zwischengrößen ermitteln.

9. Elektro-pneumatisches Bremssystem nach einem der vorangehenden Ansprüche, **dadurch gekennzeichnet, dass** die Eingangsgrößen nach einer Signalvorverarbeitung der Erfassungs- und Entscheidungseinrichtung (10) zugeführt werden.

10. Elektro-pneumatisches Bremssystem nach einem der vorangehenden Ansprüche, **dadurch gekennzeichnet, dass** in einer anfänglichen Betriebssituation die Erfassungsund Entscheidungseinrichtung (10) einen Eingangsvektor auf der Grundlage zumindest einer Festwert-Signalquelle erzeugt.

11. Elektro-pneumatisches Bremssystem nach einem der vorangehenden Ansprüche, **dadurch gekennzeichnet, dass** in einer auf die anfängliche Betriebssituation folgenden Betriebssituation die Erfassungs- und Entscheidungseinrichtung (10) einen erzeugten Eingangsvektor (V2) in einem Speicher ablegt und dann, wenn der abgelegte Eingangsvektor in einer nächsten anfänglichen Betriebssituation weiterhin Gültigkeit besitzt, den abgelegten Eingangsvektor als Eingangsvektor für die nächste anfängliche Betriebssituation verwendet.

12. Elektro-pneumatisches Bremssystem nach einem der vorangehenden Ansprüche, **dadurch gekennzeichnet, dass** in einer anfänglichen Betriebssituation die Erfassungsund Entscheidungseinrichtung (10) einen Eingangsvektor auf der Grundlage zumindest einer Festwert-Signalquelle erzeugt, und in einer auf die anfängliche Betriebssituation folgenden Betriebssituation auf einen Eingangsvektor auf der Grundlage zumindest eines Messwerts und/oder zumindest eines Schätzwerts adaptiert und den adaptierten Eingangsvektor verwendet.

13. Elektro-pneumatisches Bremssystem nach einem der vorangehenden Ansprüche, **dadurch gekennzeichnet, dass** bei einer Änderung der Verfügbarkeit einer Eingangsgröße die Erfassungs- und Entscheidungseinrichtung (10) den geltenden Eingangsvektor nach einer vorbestimmten Regel auf andere, verfügbare Eingangsgrößen modifiziert.

14. Elektro-pneumatisches Bremssystem nach einem der vorangehenden Ansprüche, **dadurch gekennzeichnet, dass** bei einer Änderung der Verfügbarkeit einer Eingangsgröße dann, wenn mehrere alternative geeignete Eingangsvektoren zur Verfügung stehen, die Erfassungs- und Entscheidungseinrichtung (10) durch Erfassen des Ist-Zustands des Fahrzeugs und Anwenden zumindest einer vorbestimmten Regel einen neuen geeigneten Eingangsvektor erzeugt.

## Claims

1. Combined electro-pneumatic braking system, which combines a pressure controller and a differential slip controller, containing:
a detection and decision unit (10), which detects input values from different signal sources available as part of a first input vector (10); and
at least one control unit (30) to determine at least one intermediate value for a brake pressure calculation, to which a second input vector (V2) containing at least one input value is supplied from the detection and decision unit (10),
a pre-processing means (20) is provided, which performs an axle load sensor signal-free calculation of parameters relevant for a braking process and supplies this as a further part of the first input vector (V1) to the detection and decision unit (10);
and
the detection and decision unit (10):
generates the at least one input value contained in the second input signal vector (V2) from the input values contained in the first input signal vector (V1) as a function of the detected operating situation or an availability of the input values,
at the same time selects, from a plurality of calculation means available as a function of the detected operating situation or the availability of the input values, and in assignment to the at least one input value contained in the second input signal vector (V2), at least one performable calculation means, and
the control unit (30) calculates for the brake pressure calculation the at least one intermediate value using the at least one selected, performable calculation means as a function of the content of the second input vector (V2),
**characterised in that**
the detection and decision unit (10) is designed to analyse the content of the first input vector (V1) and, in accordance with this analysis, to create or generate a suitable second input vector (V2), which takes into account the failure of a sensor as a signal source for the pre-processing means (20) and therefore looks different from a second input vector (V2) in the error-free case.

2. Electro-pneumatic braking system according to claim 1, **characterised in that** the detection and decision unit (10) dynamically changes the input vector (V2) during the operation corresponding to a changed operating situation.

3. Electro-pneumatic braking system according to one of the preceding claims, **characterised in that** the calculation of the intermediate value for the brake pressure calculation is performed, in the control unit (30), as a function of the input vector (V2) dynamically in different ways.

4. Electro-pneumatic braking system according to one of the preceding claims, **characterised in that** the input values contain at least values describing the vehicle geometry, a function representing the correlation between brake pressure and torque, and / or a value representing the axle load.

5. Electro-pneumatic braking system according to one of the preceding claims, **characterised in that** the signal sources contain a fixed value, a measured value and / or an estimated value.

6. Electro-pneumatic braking system according to one of the preceding claims, **characterised in that** the at least one intermediate value represents a braking force level, a braking force distribution and / or a train adjustment.

7. Electro-pneumatic braking system according to one of the preceding claims, **characterised in that** the at least one control unit (30) determines each, at least one, intermediate value by means of one or more suitable algorithms.

8. Electro-pneumatic braking system according to one of the preceding claims, **characterised in that** a plurality of control units (30-1, 30-2, 30-3) are provided, which determine, independently from each other, a plurality of the intermediate values.

9. Electro-pneumatic braking system according to one of the preceding claims, **characterised in that** the input values are supplied, after signal pre-processing, to the detection and decision unit (10).

10. Electro-pneumatic braking system according to one of the preceding claims, **characterised in that**, in an initial operating situation, the detection and decision unit (10) generates an input vector based on at least one fixed value signal source.

11. Electro-pneumatic braking system according to one of the preceding claims, **characterised in that**, in an operating situation following the initial operating situation, the detection and decision unit (10) stores a generated input vector (V2) in a memory and, when the stored input vector continues to have validity in a next initial operating situation, uses the stored input vector as an input vector for the next initial operating situation.

12. Electro-pneumatic braking system according to one of the preceding claims, **characterised in that**, in an initial operating situation, the detection and decision unit (10) generates an input vector based on at least one fixed value signal source, and, in an operating situation following the initial operating situation, adapts it to an input vector based on at least one measured value and / or at least one estimated value and uses the adapted input vector.

13. Electro-pneumatic braking system according to one of the preceding claims, **characterised in that**, in the event of a change in the availability of an input value, the detection and decision unit (10) modifies the valid input vector, according to a predetermined rule, to other, available input values.

14. Electro-pneumatic braking system according to one of the preceding claims, **characterised in that**, in the event of a change in the availability of an input value, when a plurality of alternative suitable input vectors are available, the detection and decision unit (10) generates, by detecting the actual state of the vehicle and applying at least one predetermined rule, a new suitable input vector.

## Revendications

1. Système de freinage électropneumatique combiné, qui combine une commande de pression et une régulation de glissement différentielle comportant :
un dispositif (10) de détection et de décision, qui détecte, comme partie d'un premier vecteur (10) d'entrée, des grandeurs d'entrée mises à disposition à partir de sources de signaux différents mises à disposition, et au moins une unité (30) de commande, pour déterminer au moins une grandeur intermédiaire pour un calcul de pression de freinage auquel est envoyé, par le dispositif (10) de détection et de décision, un deuxième vecteur (V2) d'entrée comportant au moins une grandeur d'entrée,
il est prévu un dispositif (20) de prétraitement, qui effectue un calcul, exempt de signal de capteur de charge d'essieu de paramètres pertinents pour une opération de freinage et l'envoie, comme autre partie du premier vecteur (V1) d'entrée, au dispositif (10) de détection et de décision et
le dispositif (10) de détection et de décision
produit, en fonction de la situation de fonctionnement détectée ou d'une disponibilité des grandeurs d'entrée, la au moins une grandeur d'entrée, contenue dans le deuxième vecteur (V2) de signal d'entrée, à partir des grandeurs d'entrée contenues dans le premier vecteur (V1) de signal d'entrée,
choisit en même temps, dans une pluralité de moyens de calcul mis à disposition en fonction de la situation de fonctionnement détectée ou de la disponibilité des grandeurs d'entrée et en association avec la au moins une grandeur d'entrée contenue dans le deuxième vecteur (V2) de signal d'entrée, au moins un moyen de calcul pouvant être effectué et
l'unité (30) de commande calcule, pour le calcul de la pression de freinage, en fonction du contenu du deuxième vecteur (V2) d'entrée, la au moins une grandeur intermédiaire en utilisant le au moins un moyen de calcul choisi pouvant être effectué,
**caractérisé en ce que**
le dispositif (10) de détection et de décision est constitué pour analyser le contenu du premier vecteur (V1) d'entrée et pour établir ou pour produire conformément à cette analyse un deuxième vecteur (V2) d'entrée approprié, qui prend en compte la défaillance d'un capteur comme source de signal pour le dispositif (20) de prétraitement et apparaît ainsi autrement qu'un deuxième vecteur (V2) d'entrée dans le cas où il n'y a pas de défaillance.

2. Système de freinage électropneumatique suivant la revendication 1, **caractérisé en ce que** le dispositif (10) de détection et de décision modifie le vecteur (V2) d'entrée pendant le fonctionnement, conformément à une modification de la situation de fonctionnement.

3. Système de freinage électropneumatique suivant l'une des revendications précédentes, **caractérisé en ce que** le calcul de la grandeur intermédiaire, pour le calcul de la pression de freinage dans l'unité (30) de commande, s'effectue dynamiquement de façon différente en fonction du vecteur (V2) d'entrée.

4. Système de freinage électropneumatique suivant l'une des revendications précédentes, **caractérisé en ce que** les grandeurs d'entrée comportent au moins des grandeurs décrivant la géométrie du véhicule, une fonction reproduisant la relation entre la pression de freinage et le couple de freinage et/ou une grandeur représentant la charge d'essieu.

5. Système de freinage électropneumatique suivant l'une des revendications précédentes, **caractérisé en ce que** les sources de signaux comportent une valeur fixe d'une valeur de mesure et/ou une valeur d'estimation.

6. Système de freinage électropneumatique suivant l'une des revendications précédentes, **caractérisé en ce que** la au moins une grandeur intermédiaire représente un niveau de force de freinage, une répartition de force de freinage et/ou un accord de traction.

7. Système de freinage électropneumatique suivant l'une des revendications précédentes, **caractérisé en ce que** la au moins une unité (30) de commande détermine chaque au moins une grandeur intermédiaire, au moyen d'un ou de plusieurs algorithmes appropriés.

8. Système de freinage électropneumatique suivant l'une des revendications précédentes, **caractérisé en ce qu'**il est prévu plusieurs unités (30-1, 30-2, 30-3) de commande, qui déterminent plusieurs des grandeurs intermédiaires indépendamment les unes des autres.

9. Système de freinage électropneumatique suivant l'une des revendications précédentes, **caractérisé en ce que** les grandeurs d'entrée sont envoyées après un traitement du signal au dispositif (10) de détection et de décision.

10. Système de freinage électropneumatique suivant l'une des revendications précédentes, **caractérisé en ce que**, dans une situation de fonctionnement initiale, le dispositif (10) de détection et de décision produit un vecteur d'entrée sur la base d'au moins une source de signal à valeur fixe.

11. Système de freinage électropneumatique suivant l'une des revendications précédentes, **caractérisé en ce que**, dans une situation de fonctionnement suivant une situation de fonctionnement initiale, le dispositif (10) de détection et de décision mémorise un vecteur (V2) d'entrée produit dans une mémoire et ensuite, si le vecteur d'entrée mémorisé possède encore de la validité dans une situation initiale suivante, utilise le vecteur d'entrée mémorisé comme vecteur d'entrée pour la situation de fonctionnement initiale suivante.

12. Système de freinage électropneumatique suivant l'une des revendications précédentes, **caractérisé en ce que**, dans une situation de fonctionnement initiale, le dispositif (10) de détection et de décision produit un vecteur d'entrée sur la base d'au moins une source de signal à valeur fixe et, dans une situation de fonctionnement suivant la situation de fonctionnement initiale, adapte un vecteur d'entrée sur la base d'au moins une valeur de mesure et/ou d'au moins une valeur d'estimation et utilise le vecteur d'entrée adapté.

13. Système de freinage électropneumatique suivant l'une des revendications précédentes, **caractérisé en ce que**, si la disponibilité d'une valeur d'entrée se modifie, le dispositif (10) de détection et de décision modifie le vecteur d'entrée en vigueur suivant une règle définie à l'avance vers d'autres grandeurs d'entrée disponibles.

14. Système de freinage électropneumatique suivant l'une des revendications précédentes, **caractérisé en ce que**, si la disponibilité d'une grandeur d'entrée se modifie et si plusieurs vecteurs d'entrée appropriés possibles sont disponibles, le dispositif (10) de détection et de décision produit, en détectant la valeur réelle du véhicule et en utilisant au moins une règle définie à l'avance, un nouveau vecteur d'entrée approprié.
